# EUROPEAN PATENT SPECIFICATION

(11) **EP 3 050 423 B1**
(45) Date of publication and mention of the grant of the patent: **09.05.2018**
(21) Application number: 16152787.4
(22) Date of filing: 26.01.2016
(51) Int. Cl.: A01D 34/67, A01D 34/82, B60B 35/00, A01D 34/74, A01D 101/00

(54) **MOWER WITH QUICK ASSEMBLY SELF-SUPPORTING APPARATUS**
MÄHER MIT SELBSTTRAGENDER SCHNELLMONTAGEVORRICHTUNG
TONDEUSE À GAZON AVEC APPAREIL AUTOPORTANT À ASSEMBLAGE RAPIDE

(30) Priority: 28.01.2015 IT MI20150103
(43) Date of publication of application: 03.08.2016
(73) Proprietor: Stiga S.p.A. in breve anche St. S.p.A., 31033 Castelfranco Veneto (TV) (IT)
(72) Inventor: D'AGOSTINI, Mauro, 35018 San Martino di Lupari (PD) (IT)
(74) Representative: Mittler, Andrea

(56) References cited:
- EP-A1- 0 554 632
- EP-A1- 1 749 433
- US-A- 5 080 501
- US-A- 5 230 208

## Description

The present invention relates to a mower with a quick assembly self-supporting apparatus.

In known mowers, fixing the axle of the front wheels to the body substantially occurs by means of components which are secured to the body through screw fastening.

For example, a fastening system is known, comprising two separate plastic parts which are placed side-by-side about the axle close to seats of the body with which they are engaged. The two parts are fixed to each other by means of two through screws, transverse to the direction of the wheel axle, and by means of two nuts.

In such a fastening system, there is the problem that the vibrations pass through the screws, resulting in the nuts requiring periodic tightening to avoid the wheel axle from uncoupling from the body.

Another example of a traditional fastening system comprises a metal plate which is inserted on the wheel axle before being welded in a single piece. The plate is then fixed to the body by means of a pair of screws and just as many nuts. The process of assembling the plate is laborious and the stresses pass through the screws also in this case.

A third example of a fastening system comprises a first plastic part to be screwed to the mower body and a second metal part to be screwed to said first plastic part, once the wheel axle has been interposed. The number of screws used in this case is even greater, with a rather challenging assembly process.

An apparatus for mounting an axle on the body of a mower comprising two portions which can be snapped together is known from Patent US-5230208. A front portion of the apparatus mounts the wheel and the other rear portion is mounted on the axle. Said apparatus serves the function of adjusting the cutting height.EP-1749433 instead describes a lawncare apparatus comprising a chassis, at least one axle defining a first axis, the axle having first and second axle ends, and a wheel mounted for rotation at each of said first and second axle ends. Each of said first and second axle ends is carried by a respective adjustment member mounted for rotation about a respective second axis upon the chassis of the machine, wherein the second axis is non-coaxial with the first axis. Preferably, each axle is mounted for pivotal movement about the second axis within an arcuate slot in the chassis.

It is the object of the present invention to provide a mower with a system for fixing the axle, which is easy and quick to be mounted while not suffering from the problems related to the above vibrations.

According to the invention, such an object is achieved by a mower as claimed in claim 1 and by a method as claimed in claim 6. These and other features of the present invention will become more apparent from the following detailed description of an embodiment thereof, shown by way of a non-limiting example in the accompanying drawings, in which:
Figure 1 shows an axonometric view of a mower according to the present invention, comprising a quick assembly self-supporting apparatus;
Figure 2 shows an axonometric view of an element of the quick assembly self-supporting apparatus included in the mower in Figure 1;
Figures 3a, 3b show a front view and a sectional view, respectively, of the element in Figure 2 according to line III in Figure 3a;
Figure 4 shows a front view of a first and a second component included in the element in Figure 2;
Figure 5 shows a rear view of the first and second components in Figure 4;
Figure 6 shows a side view of the first and second components in Figure 4;

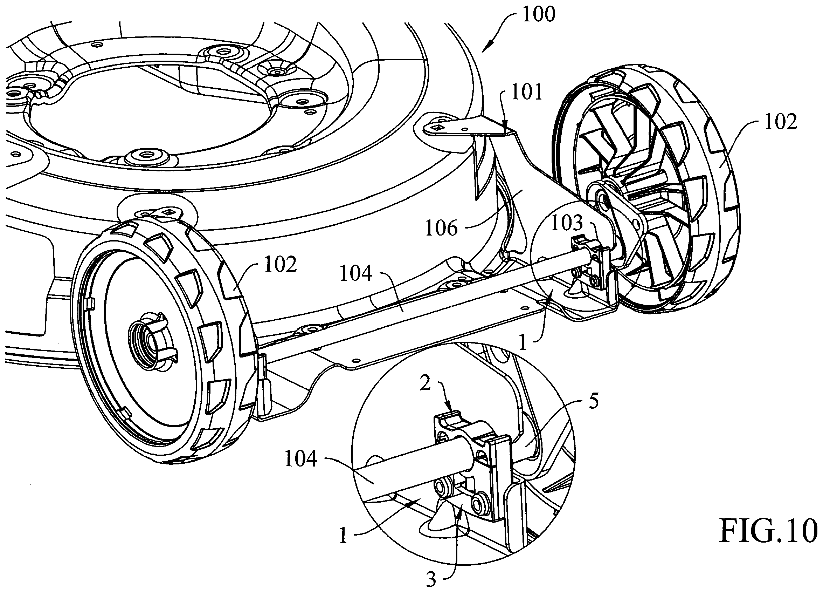

Figures 7-10 show the steps of assembling and mounting the quick assembly self-supporting apparatus on the mower body.

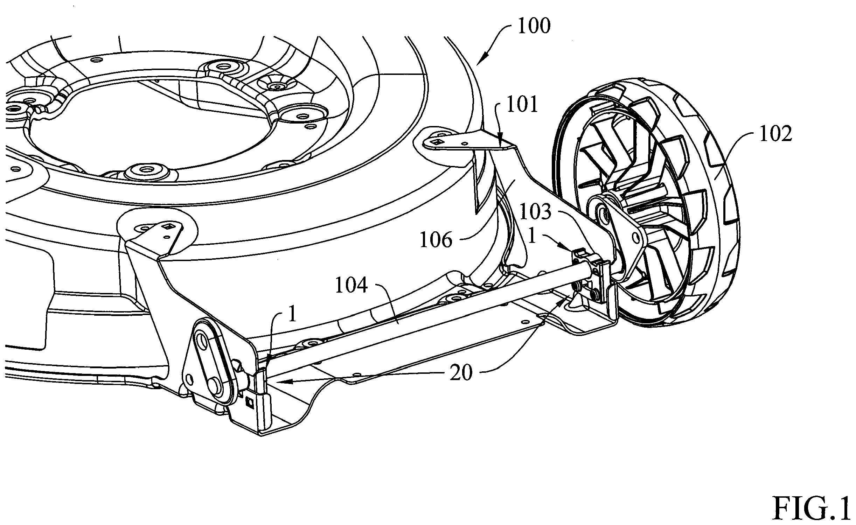

Figure 1 shows a mower 100 according to the present invention, comprising a quick assembly self-supporting apparatus 20. Mower 100 comprises a body 101 and an axle 104 connected to two front wheels 102. The self-supporting apparatus 20 is configured to be coupled to body 101 in order to mount axle 104 on the latter 101.

The self-supporting apparatus 20 comprises a pair of elements 1 adapted to be hooked to body 101 by being inserted into a corresponding pair of opposite seats 103, which are in the front part of the body 101 of mower 100. Each of said seats 103 is particularly arranged in a vertical wall close to the location of wheel 102, and has such a shape as to allow the insertion of axle 104 and the coupling by means of the corresponding element 1.

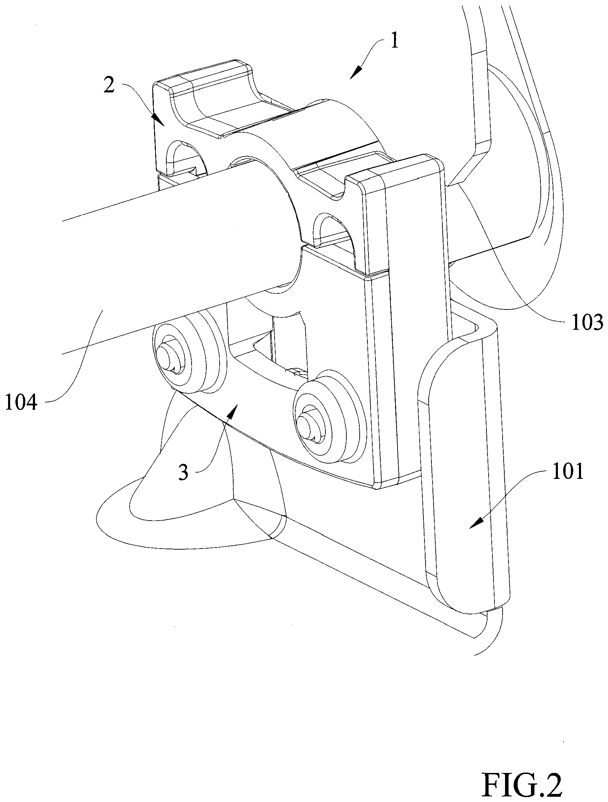

In particular, each element 1 comprises a first and a second component 2, 3 configured to be snappingly assembled together (Figures 2-6) with the axle 104 interposed therebetween and, thus assembled, inserted into the respective seat 103 of body 101.

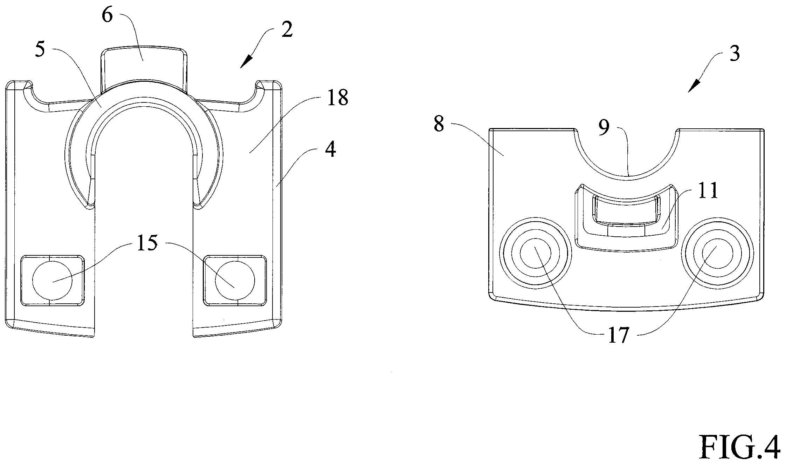

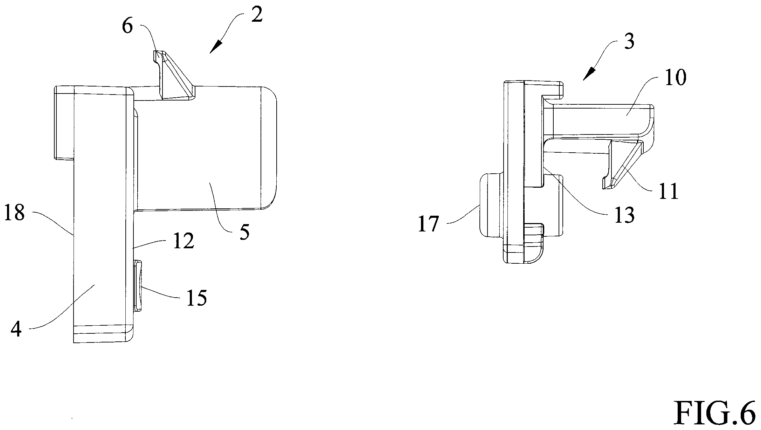

The first component 2 (Figures 4-6) comprises a substantially "U"-shaped first portion 4, with the plane of the "U" arranged perpendicular to the direction of axle 104. A first curved portion 5 departs from said first portion 4, as an extension of the inner curve of the "U", along the direction of axle 104 (Fig. 6). In particular, said first portion 4 is positioned above axle 104 with the "U" being oriented downward (Fig. 2); axle 104 is inserted into the "U". Preferably, said first curved portion 5 is a cylinder portion with a curve having an angle greater than 180 degrees, so as to be hooked to axle 104.

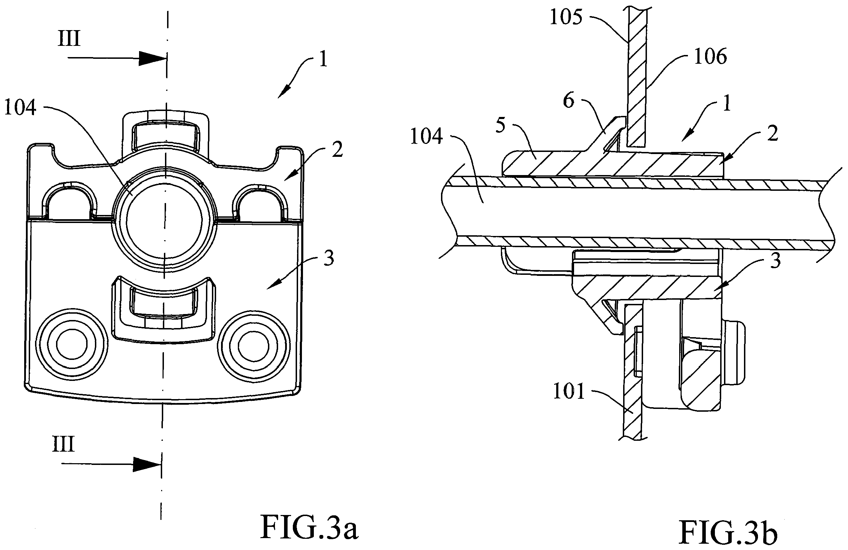

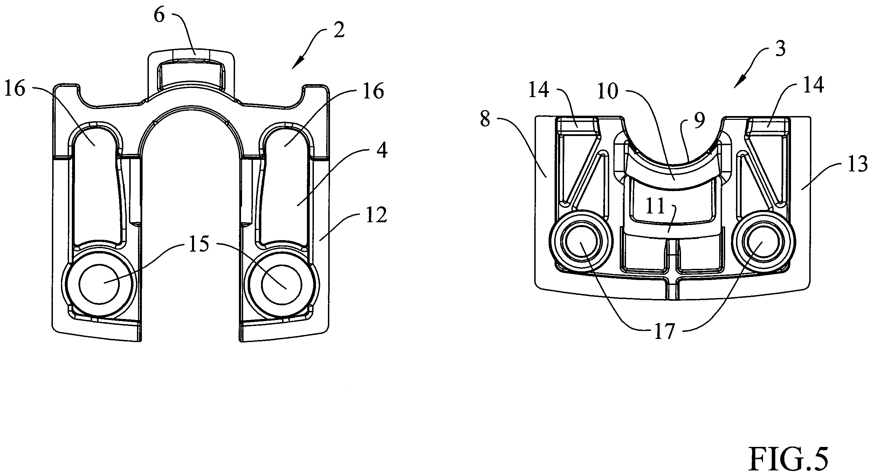

The first component 2 then comprises a first tooth 6, which departs from the outer surface and at the free end of the first curved portion 5 (Fig. 5). According to the present embodiment, said first tooth 6 departs in oblique (or in any case transverse) direction with respect to the direction of axle 104; the first tooth 6 is adapted to be engaged with an outer wall 105 of the body 101 of mower 100 (Fig. 3).

The second component 3 (Figures 4-6) comprises a substantially flat second portion 8, with the plane parallel to that of the "U" of the first component 2. Said second portion 8 comprises a curved indentation 9 from which a second curved portion 10 departs along the direction of axle 104. In particular, said second component 3 is positioned below axle 104 with said curved indentation 9 in contact with the latter 104; similarly to the first component 2, the curved indentation 9 is adapted to house axle 104. The second curved portion 10 is a cylinder portion with a curve having an explementary angle with respect to the angle of the first curved portion 5.

The second component 3 then comprises a second tooth 11, which departs from the outer surface and at the free end of the second curved portion 10. As for the first tooth 6, the second tooth 11 is also adapted to be engaged with the outer wall 105 of the body 101 of mower 100.

The assembly of said first and second elements 2, 3 causes said two curved portions 5, 10 to join so as to form a cylinder inside which axle 104 is inserted and is free to rotate. Each of the elements 1 thus assembled may be hooked to body 101 by inserting the cylinder into the respective seat 103 and with a rotation of the self-supporting apparatus 20 by about 90 degrees so that said first and second teeth 6, 11 contrast with the outer wall 105 of body 101.

Said first and second components 2, 3 (Fig. 5) comprise a first and a second face 12, 13, respectively, which are shaped in a complementary manner so as to snap together when assembled. In particular, the second face 13 comprises two protrusions 14 and two through holes 15 along the direction of axle 104, having a raised edge, while the first face 12 comprises two seats 16 adapted to house said two protrusions 14 and two further through holes 17 along axle 104 with a lowered edge. The through holes 15 and the further through holes 17 are arranged so as to be aligned, with the raised edges inserted into the seats provided by the lowered edges.

A third face 18 (Fig. 4) of said first component 2, opposite to said first face 12, is positioned in contact with an inner wall 106 of the body 101 of mower 100.

Each element 1 may be fixed to body 101 by means of a pair of screws 7 adapted to be inserted into the aligned through holes 15, 17 and through the holes 107 present in body 101.

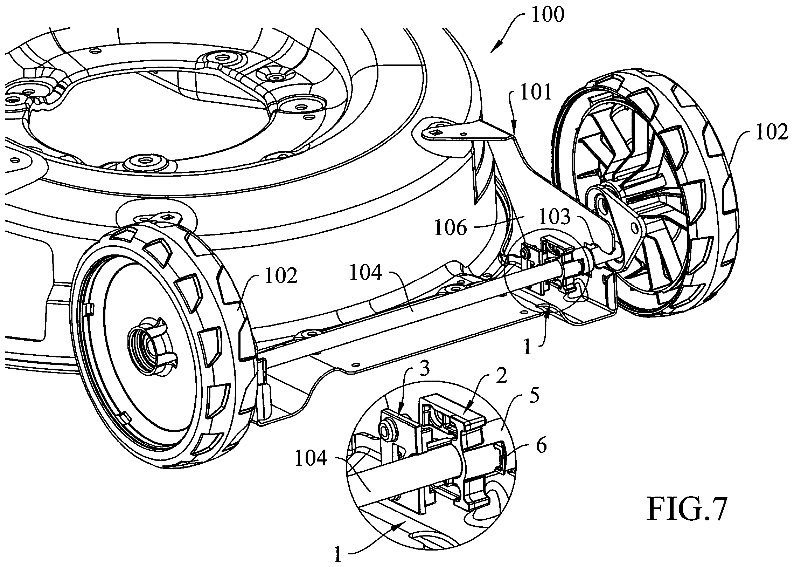

When assembling and mounting the self-supporting apparatus 20 on body 101, the first component 2 of each element 1 is positioned on the axle 104 of the front wheels 102 (Fig. 7) so that axle 104 is inserted into the curve of the "U" and hooks the first curved portion 5. The first component 2 is oriented with the free end of the first curved portion 5 facing the respective wheel 102.

The second component 3 is then positioned on axle 104, with said axle 104 in contact with the curved indentation 9 and with the second curved portion 10. The second component 3 is oriented with the free end of the second curved portion 10 also facing the respective wheel 102.

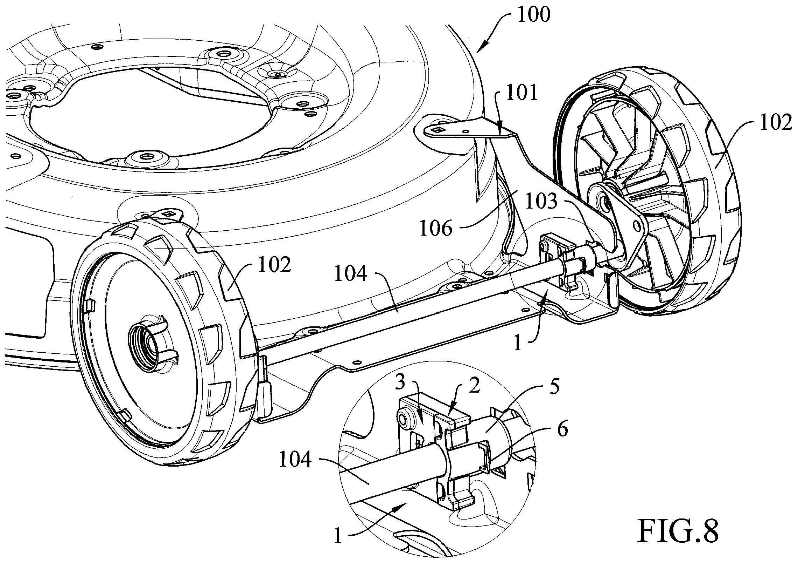

The first and second components 2, 3 are snappingly assembled (Fig. 8) so that the two protrusions 14 are inserted into the respective seats 16 and so that the through holes 15 align with the further holes 17, with the raised edges being inserted into the seats provided by the lowered edges.

The self-supporting apparatus 20 thus assembled is mounted on body 101 and each of the elements 1 is coupled to body 101. In particular, the cylinder resulting from the connection of said first and second curved portions 5, 10 is inserted into the respective seat 103 on body 101, with the third face 18 of the first component 2 in abutment with the inner wall 106 of body 101 (Fig.8).

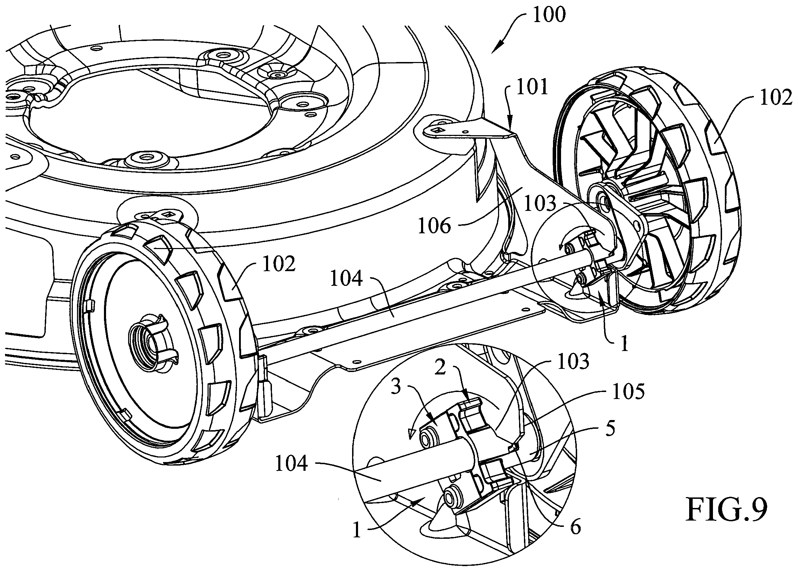

At this point, the self-supporting apparatus 20 is rotated by about 90 degrees (Fig. 9) to be hooked to body 101 by means of said first and second teeth (6, 11), which contrast with the outer wall 105 of 101.

Finally, the self-supporting apparatus 1 may be fixed to body 101 by means of two screws 7 which are inserted from the outer wall 105 of body 101 through the holes 107 therein and then into the through holes 15, 17.

Mower 100 according to the present invention, with quick assembly self-supporting apparatus 20, provides a system for fixing he axle 104 of the front wheels 102 to the body 101 of mower 100, which is easy and quick to be mounted while not suffering from the problems related to the vibrations of the fastening systems of the known mowers.

## Claims

1. A mower (100) comprising a body (101) and an axle (104) connected to two front wheels (102), said mower (100) comprising a quick assembly self-supporting apparatus (20), comprising in turn a pair of elements (1) adapted to be hooked to the body (101) in order to mount the axle (104) on the latter (101), **characterized in that** each of said elements (1) comprises a first and a second component (2, 3) configured to be assembled together with the axle (104) interposed therebetween, and hooked in respective seats (103) of the body (101) by means of a first and a second locking tooth (6, 11) belonging to said first and second components (2, 3), respectively, and **in that** said first component (2) comprises:
- a substantially "U"-shaped first portion (4), with the plane of the "U" arranged perpendicular to the direction of the axle (104),
- a first curved portion (5) which departs from said first portion (4) along the direction of the axle (104) and is adapted to be hooked to the latter (104),
- said first tooth (6), which departs from the outer surface and at the free end of the first curved portion (5), adapted to be engaged with an outer surface (105) of the body (101),
and **in that** said second component (3) comprises:
- a substantially flat second portion (8), with the plane parallel to that of the "U" of the first component (2) and a curved indentation (9) from which a second curved portion (10) departs along the direction of the axle (104),
- said second tooth (11), which departs from the outer surface and at the free end of the second curved portion (10), adapted to be engaged with said outer surface (105) of the body (101).

2. A mower (100) according to claim 1, **characterized in that** said first and second components (2, 3) are assembled together so that the first and second curved portions (5, 10) form a cylinder inside which the axle (104) is inserted and is free to rotate, said cylinder being placed inside at least one of the seats (103) of the body (101) for hooking the element (1) by means of said first and second teeth (6, 11).

3. A mower (100) according to claim 1, **characterized in that** said first and second components (2, 3) comprise a first and a second face (12, 13), respectively, which are shaped in a complementary manner, said second face (13) comprising two protrusions (14) and two through holes (15) along the direction of the axle (104) having a raised edge, said first face (12) comprising two seats (16) adapted to house said two protrusions (14), and two further through holes (17) along the axle (104) with a lowered edge and aligned with the through holes (15).

4. A mower (100) according to claim 3, **characterized in that** said first component (2) comprises a third face (18), opposite to said first face (12), which is positioned in contact with an inner wall (106) of the body (101).

5. A mower (100) according to any one of the preceding claims, **characterized in that** each of said elements (1) is fixed to the body (101) by means of a pair of screws (7) adapted to be inserted into the through holes (15, 17) mutually aligned and through the holes (107) in the body (101).

6. A method of mounting an axle (104) connected to two front wheels (102) on a body (101) of a mower (100) by means of a quick assembly self-supporting apparatus (20), said method **characterized in that** it comprises:
- assembling each of a pair of elements (1) included in the self-supporting apparatus (20) by fixing a first and a second component (2, 3) so that a first and a second curved portion (5, 10) in the first and second components (2, 3), respectively, form a cylinder into which the axle (104) is inserted and is free to rotate,
- inserting the cylinder of each element (1) into a respective seat (103) of the body (101) so that at least one face (18) of the element (1) is in abutment with an inner wall (106) of the body (101),
- rotating the self-supporting apparatus (20) by about 90 degrees so that each element (1) hooks the body (101) by means of a first and a second tooth (6, 11) belonging to said first and second components (2, 3), respectively, which contrast with an outer wall (105) of the body (101).

7. A method according to claim 6, **characterized in that** it includes the step of fixing the element (1) to the body (101) by means of two screws (7) which are inserted from the outer wall (105) of the body (101) through the holes (107) therein and then into the through holes (15, 17) of the element (1).

## Patentansprüche

1. Mäher (100) mit einem Körper (101) und einer Achse (104), die mit zwei Vorderrädern (102) verbunden ist, wobei der Mäher (100) eine selbsttragende Schnellmontagevorrichtung (20) aufweist, die wiederum ein Paar Elemente (1) aufweist, die zum Einhaken an dem Körper (101) ausgebildet sind, um die Achse (104) an dem Körper (101) anzubringen,
**dadurch gekennzeichnet, dass** jedes der Elemente (1) eine erste und eine zweite Komponente (2, 3) aufweist, die dazu ausgebildet sind, unter Zwischenanordnung der Achse (104) zusammengebaut zu werden sowie in jeweilige Sitze (103) des Körpers (101) eingehakt zu werden mittels eines ersten und eines zweiten Verriegelungszahns (6, 11), die zu der ersten bzw. der zweiten Komponente (2, 3) gehören, und dass die erste Komponente (2) aufweist:
- einen im Wesentlichen "U"-förmigen ersten Bereich (4), wobei die Ebene des "U" rechtwinklig zu der Richtung der Achse (104) angeordnet ist,
- einen ersten gekrümmten Bereich (5), der sich von dem ersten Bereich (4) entlang der Richtung der Achse (104) weg erstreckt und dazu ausgebildet ist, an Letzterer (104) eingehängt zu werden,
- den ersten Zahn (6), der sich von der Außenfläche weg erstreckt und an dem freien Ende des ersten gekrümmten Bereichs (5) vorgesehen ist und dazu ausgebildet ist, mit einer Außenfläche (105) des Körpers (101) zusammenzuwirken;
und dass die zweite Komponente (3) aufweist:
- einen im Wesentlichen ebenen zweiten Bereich (8), dessen Ebene parallel zu der des "U" der ersten Komponente (2) ist und der eine gekrümmte Vertiefung (9) aufweist, von der sich ein zweiter gekrümmter Bereich (10) entlang der Richtung der Achse (104) weg erstreckt,
- den zweiten Zahn (11), der sich von der Außenfläche weg erstreckt und an dem freien Ende des zweiten gekrümmten Bereichs (10) vorgesehen ist und dazu ausgebildet ist, mit der Außenfläche (105) des Körpers (101) zusammenzuwirken.

2. Mäher (100) nach Anspruch 1,
**dadurch gekennzeichnet, dass** die erste und die zweite Komponente (2, 3) derart zusammengebaut sind, dass der erste und der zweite gekrümmte Bereich (5, 10) einen Zylinder bilden, in den die Achse (104) eingesetzt wird und in dem diese frei drehbar ist, wobei der Zylinder innerhalb mindestens eines des Sitze (103) des Körpers (101) angeordnet ist, um das Element (1) mittels des ersten und des zweiten Zahns (6, 11) zu verhaken.

3. Mäher (100) nach Anspruch 1,
**dadurch gekennzeichnet, dass** die erste und die zweite Komponente (2, 3) eine erste bzw. eine zweite Fläche (12, 13) aufweisen, die eine komplementäre Formgebung aufweisen, wobei die zweite Fläche (13) zwei Vorsprünge (14) und zwei Durchgangsöffnungen (15) entlang der Richtung der Achse (104) mit einem erhöhten Rand aufweist und die erste Fläche (12) zwei Sitze (16) aufweist, die zum Aufnehmen der beiden Vorsprünge (14) ausgebildet sind, sowie zwei weitere Durchgangsöffnungen (17) entlang der Achse (104) mit einem abgesenkten Rand sowie in Ausrichtung mit den Durchgangsöffnungen (15) aufweisen.

4. Mäher (100) nach Anspruch 3,
**dadurch gekennzeichnet, dass** die erste Komponente (2) eine der ersten Fläche (12) gegenüberliegende dritte Fläche (18) aufweist, die in Kontakt mit einer Innenwand (106) des Körpers (101) positioniert ist.

5. Mäher (100) nach einem der vorhergehenden Ansprüche,
**dadurch gekennzeichnet, dass** jedes der Elemente (1) an dem Körper (101) mittels eines Paares von Schrauben (7) befestigt ist, die dazu ausgebildet sind, in die miteinander ausgerichteten Durchgangsöffnungen (15, 17) sowie durch die Öffnungen (107) in dem Körper (101) eingeführt zu werden.

6. Verfahren zum Montieren einer Achse (104), die mit zwei Vorderrädern (102) an einem Körper (101) eines Mähers (100) verbunden wird, mittels einer selbsttragenden Schnellmontagevorrichtung (20),
wobei das Verfahren **dadurch gekennzeichnet ist, dass** es folgende Schritte aufweist:
- Zusammenbauen eines jeweiligen Paares von Elementen (1), die in der selbsttragenden Vorrichtung (20) enthalten sind, durch derartiges Befestigen einer ersten und einer zweiten Komponente (2, 3), dass ein erster und ein zweiter gekrümmter Bereich (5, 10) in der ersten bzw. zweiten Komponente (2, 3) einen Zylinder bilden, in den die Achse (104) eingesetzt wird und in dem sie sich frei drehen kann,
- Einsetzen des Zylinders jedes Elements (1) in einen jeweiligen Sitz (103) des Körpers (101), so dass mindestens eine Fläche (18) des Elements (1) an einer Innenwand (106) des Körpers (101) anliegt,
- Drehen der selbsttragenden Vorrichtung (20) um etwa 90 Grad, so dass jedes Element (1) an dem Körper (101) mittels eines ersten und eines zweiten Zahns (6, 11) verhakt wird, die zu der ersten bzw. zweiten Komponente (2, 3) gehören, die einer Außenwand (105) des Körpers (101) gegenüberliegen.

7. Verfahren nach Anspruch 6,
**dadurch gekennzeichnet, dass** es den Schritt des Befestigens des Elements (1) an dem Körper (101) mittels zweier Schrauben (7) aufweist, die von der Außenwand (105) des Körpers (101) durch die darin vorhandenen Öffnungen (107) und dann in die Durchgangsöffnungen (15, 17) des Elements (1) hinein eingesetzt werden.

## Revendications

1. Tondeuse à gazon (100) comprenant un corps (101) et un essieu (104) raccordé à deux roues avant (102), ladite tondeuse (100) comprenant un appareil autoporteur à assemblage rapide (20), comprenant à son tour une paire d'éléments (1) adaptés pour être accrochés au corps (101) afin de monter l'essieu (104) sur ce dernier (101), **caractérisée en ce que** chacun desdits éléments (1) comprend un premier et un second composant (2, 3) configurés pour être assemblés conjointement avec l'essieu (104) intercalé entre eux, et accrochés dans des sièges (103) respectifs du corps (101) au moyen d'une première et d'une seconde dent de verrouillage (6, 11) appartenant auxdits premier et second composants (2, 3) respectivement, et
**en ce que** ledit premier composant (2) comprend :
une première partie sensiblement en forme de « U » (4), avec le plan du « U » agencé perpendiculairement à la direction de l'essieu (104),
une première partie incurvée (5) qui s'éloigne de ladite première partie (4) le long de la direction de l'essieu (104) et est adaptée pour être accrochée à ce dernier (104),
ladite première dent (6) qui s'éloigne de la surface externe et au niveau de l'extrémité libre de la première partie incurvée (5), est adaptée pour être mise en prise avec une surface externe (105) du corps (101),
et **en ce que** ledit second composant (3) comprend :
une seconde partie (8) sensiblement plate, avec le plan parallèle à celui du « U » du premier composant (2) et une indentation incurvée (9) à partir de laquelle une seconde partie incurvée (10) s'éloigne le long de la direction de l'essieu (104),
ladite seconde dent (11) qui s'éloigne de la surface externe et au niveau de l'extrémité libre de la seconde partie incurvée (10), est adaptée pour être mise en prise avec ladite surface externe (105) du corps (101).

2. Tondeuse à gazon (100) selon la revendication 1, **caractérisée en ce que** lesdits premier et second composants (2, 3) sont assemblés de sorte que les première et seconde parties incurvées (5, 10) forment un cylindre à l'intérieur duquel l'essieu (104) est inséré et est libre de tourner, ledit cylindre étant placé à l'intérieur d'au moins l'un des sièges (103) du corps (101) pour accrocher l'élément (1) au moyen desdites première et seconde dents (6, 11).

3. Tondeuse à gazon (100) selon la revendication 1, **caractérisée en ce que** lesdits premier et second composants (2, 3) comprennent une première et une deuxième face (12, 13), respectivement, qui sont formées de manière complémentaire, ladite deuxième face (13) comprenant deux saillies (14) et deux trous débouchants (15) le long de la direction de l'essieu (104) ayant un bord levé, ladite première face (12) comprenant deux sièges (16) adaptés pour loger lesdites deux saillies (14), et deux autres trous débouchants (17) le long de l'essieu (104) avec un bord abaissé et aligné avec les trous débouchants (15).

4. Tondeuse à gazon (100) selon la revendication 3, **caractérisée en ce que** ledit premier composant (2) comprend une troisième face (18), opposée à ladite première face (12), qui est positionnée en contact avec une paroi interne (106) du corps (101).

5. Tondeuse à gazon (100) selon l'une quelconque des revendications précédentes, **caractérisé en ce que** chacun desdits éléments (1) est fixé sur le corps (101) au moyen d'une paire de vis (7) adaptées pour être insérées dans les trous débouchants (15, 17) mutuellement alignés et à travers les trous (107) dans le corps (101).

6. Procédé pour monter un essieu (104) raccordé à deux roues avant (102) sur un corps (101) d'une tondeuse à gazon (100) au moyen d'un appareil autoporteur à assemblage rapide (20), ledit procédé étant **caractérisé en ce qu'**il comprend les étapes suivantes :
assembler chacun d'une paire d'éléments (1) inclus dans l'appareil autoporteur (20) en fixant un premier et un second composant (2, 3) de sorte qu'une première et une seconde partie incurvée (5, 10) dans les premier et second composants (2, 3) respectivement, forment un cylindre dans lequel l'essieu (104) est inséré et est libre de tourner,
insérer le cylindre de chaque élément (1) dans un siège (103) respectif du corps (101) de sorte qu'au moins une face (18) de l'élément (1) est en butée avec une paroi interne (106) du corps (101),
faire tourner l'appareil autoporteur (20) d'environ 90 degrés de sorte que chaque élément (1) accroche le corps (101) au moyen d'une première et d'une seconde dent (6, 11) appartenant auxdits premier et second composants (2, 3) respectivement, qui contrastent avec une paroi externe (105) du corps (101).

7. Procédé selon la revendication 6, **caractérisé en ce qu'**il comprend l'étape suivante : fixer l'élément (1) au corps (101) au moyen de deux vis (7) qui sont insérées à partir de la paroi externe (105) du corps (101) par les trous (107) et ensuite dans les trous débouchants (15, 17) de l'élément (1).
